# EUROPÄISCHE PATENTSCHRIFT

(11) **EP 1 552 116 B1**
(45) Veröffentlichungstag und Bekanntmachung des Hinweises auf die Patenterteilung: **14.10.2009**
(21) Anmeldenummer: 03772225.3
(22) Anmeldetag: 16.10.2003
(51) Int. Cl.: F01L 1/352, F01L 1/344, F16D 3/10, F16D 1/02, F16D 1/10

(54) **ELEKTRISCH ANGETRIEBENER NOCKENWELLENVERSTELLER**
ELECTRICALLY DRIVEN CAMSHAFT ADJUSTER
DISPOSITIF DE REGLAGE DE L'ARBRE A CAMES A ENTRAINEMENT ELECTRIQUE

(30) Priorität: 17.10.2002 DE 10248351
(43) Veröffentlichungstag der Anmeldung: 13.07.2005
(73) Patentinhaber: Schaeffler KG, 91074 Herzogenaurach (DE)
(72) Erfinder: SCHÄFER, Jens, 91074 Herzogenaurach (DE); STEIGERWALD, Martin, 91056 Erlangen (DE); DEGELMANN, Jörg, 95463 Bindlach-Benk (DE); HEYWOOD, Jon, 96175 Pettstadt (DE)
(86) Internationale Anmeldenummer: PCT/EP2003/011455
(87) Internationale Veröffentlichungsnummer: WO 2004/035998

(56) Entgegenhaltungen:
- AT-B- 354 610
- DE-A- 3 418 544
- GB-A- 2 221 513
- US-A- 3 187 360
- US-A- 3 593 933
- US-A- 4 806 809
- US-A- 4 986 801
- US-A- 5 509 324
- US-A- 5 680 837
- US-A- 5 709 605
- US-B1- 6 457 446

## Beschreibung

### Geblet der Erfindung

Die Erfindung betrifft einen Nockenwellenversteller zum Verstellen und Fixieren der Drehwinkellage der Nockenwelle zur Kurbelwelle einer Hubkolbenbrennkraftmaschine, insbesondere nach dem Oberbegriff des Anspruchs 1, 5, 9, 10 oder 12.

### Hintergrund der Erfindung

In der DE 41 10 195 A1 ist ein Nockenwellenversteller zum Verstellen und Fixieren der relativen Drehwinkellage einer Nockenwelle gegenüber der Kurbelwelle einer Hubkolbenbrennkraftmaschine offenbart, mit einem hoch übersetzenden und reibungsarmen Verstellgetriebe, das eine mit der Kurbelwelle fest verbundene Antriebswelle, eine mit der Nockenwelle verdrehfest verbundene Abtriebswelle und eine mit einer Verstellmotorwelle eines Verstellmotors verbundene Verstellwelle aufweist.

Bei dieser Lösung ist die Verstellmotorwelle einstückig mit der Verstellwelle des Verstellgetriebes ausgebildet. Dadurch muss bei Ausfall des Verstellmotors immer der gesamte Nockenwellenversteller ausgetauscht werden. Außerdem ist die Montage desselben aufwendig, da eine Vormontage des kompletten Verstellmotors nicht möglich ist.

In den Dokumenten US 5,680,837, GB 2 221 513, US 6,457,446 und US 4,986,801 sind weitere Ausführungsformen von Nockenwellenverstellern zum Verstellen und Fixieren der relativen Drehwinkellage einer Nockenwelle gegenüber der Kurbelwelle einer Hubkolbenbrennkraftmaschine, mit jeweils einem Verstellgetriebe dargestellt. Die Verstellgetriebe umfassen jeweils eine mit der Kurbelwelle verdrehfest verbundene Antriebswelle, eine mit der Nockenwelle verdrehfest verbundene Abtriebswelle und eine mit einer Verstellmotorwelle eines Verstellmotors verbundene Verstellwelle. Dabei sind die Verstellgetriebe und die jeweiligen Verstellmotor als getrennte Einheiten ausgebildet und durch Kupplungen miteinander verbunden. Die Verstellmotoren sind als elektrische Verstellmotoren (3) ausgebildet. Jede der Kupplungen weist zwei zusammenfügbare Teile auf, von denen eines mit der Verstellmotorwelle und das andere mit der Verstellwelle drehfest verbunden beziehungsweise mit den Wellen einstückig ausgebildet sind.

In der US 5,680,837 ist eines der beiden Teile als Außenteil das andere als Innenteil ausgebildet ist, wobei die beiden Teile ineinander angeordnet sind. In der GB 2 221 513 ist ein Verstellmotor mit einer Welle, auf deren äußerer Mantelfläche eine Schrägverzahnung ausgebildet ist, verbunden. Auf der Welle ist eine Nabe angeordnet, deren innere Mantelfläche ebenfalls mit einer Schrägverzahnung versehen ist, die in die Schrägverzahnung der Welle eingreift. An der Nabe sind schwenkbare Hebelarme befestigt, welche schwenkbar an einem Antriebselement oder einem Abtriebselement des Nockenwellenverstellers befestigt sind. Durch Aktivierung des Verstellmotors wird die Welle in Rotation versetzt, was auf Grund der ineinander greifenden Schrägverzahnungen zu einem axialen Versatz der Nabe auf der Welle führt. Der axiale Nabenversatz führt zu einem Verschwenken der Hebelarme und damit zu einer Phasenänderung des Abtriebselements relativ zum Antriebselement.

In der US 6,457,446 ist die Verstellmotorwelle mittels zweier ineinander greifender Zahnräder mit der Verstellwelle des Nockenwellenverstellers verbunden. In der US 4,986,801 ist die Verstellmotorwelle mittels eines Planetengetriebes mit der Verstellwelle des Nockenwellenverstellers verbunden.

### Aufgabe der Erfindung

Der Erfindung liegt die Aufgabe zugrunde, einen Nockenwellenversteller zu schaffen, der kostengünstig zu betreiben ist.

### Zusammenfassung der Erfindung

Bei einem Nockenwellenversteller zum Verstellen und Fixieren der relativen Drehwinkellage einer Nockenwelle gegenüber der Kurbelwelle einer Hubkolbenbrennkraftmaschine, mit einem hoch übersetzenden und reibungsarmen Verstellgetriebe, dass eine mit der Kurbelwelle verdrehfest verbundene Antriebswelle, eine mit der Nockenwelle verdrehfest verbundene Abtriebswelle und eine mit einer Verstellmotorwelle eines Verstellmotors verbundene Verstellwelle aufweist, wird die Aufgabe dadurch gelöst, dass das Verstellgetriebe und der Verstellmotor als getrennte Einheiten ausgebildet und durch eine drehspielfreie, lösbare Kupplung miteinander verbunden sind.

Durch die getrennte Ausbildung von Verstellmotor und Verstellgetriebe kann der Verstellmotor komplett vormontiert und aufgrund der lösbaren Kupplung auf einfache Weise eingebaut bzw. ausgewechselt werden. Durch die Drehspielfreiheit der Kupplung ist deren verschleiß- und geräuscharmer Betrieb gewährleistet.

Die erfindungsgemäße Anordnung einer lösbaren Kupplung zwischen Verstellgetriebe und Verstellmotor ist unabhängig von der Art des Verstellmotors. Besonders geeignet ist der elektrische Verstellmotor. Dieser hat gegenüber einem Hydromotor den Vorteil, unabhängig von der Drehzahl des Verbrennungsmotors und somit auch bei dessen Stillstand zu funktionieren. Außerdem hat die Ölviskosität keinen Einfluss auf seine Funktion. Gegenüber einem Pneumatikmotor hat der elektrische Verstellmotor den Vorteil der im Normalfall ohnehin vorhandenen Stromversorgung und der unkomplizierteren Regelbarkeit.

Es bietet Fertigungs- und damit Kostenvorteile, wenn die Kupplung zwei zusammenfügbare Teile aufweist, von denen eines mit der Verstellmotorwelle, das andere mit der Verstellwelle drehfest verbunden ist.

Eine einfache Montage des Verstellmotors wird dadurch erreicht, dass eines der beiden Teile als Außenteil, das andere als Innenteil ausgebildet ist, wobei die beiden Teile drehspielfrei ineinander steckbar sind.

Eine vorteilhafte Weiterbildung der Erfindung besteht darin, dass die Kupplung als Profilwellenkupplung, vorzugsweise als Zweikantwellenkupplung ausgebildet ist, die je zwei Kupplungsflächen am Außenteil und je zwei Kupplungsflächen am Innenteil aufweist, wobei vorzugsweise die letzteren drehspielvermeidende Mittel aufweisen. Die bewährte Zweikantwellenkupplung bietet ausreichend Platz zur Unterbringung von drehmomentübertragenden und drehspielvermeidenden Mitteln. Als Kupplungen kommen auch Passfeder- und Profilwellenkupplungen wie Polygon-, Zahn-, Keil- und Mehrkant-Wellenkupplungen in Frage. Auch eine einseitig abgefräste Welle mit entsprechendem Gegenstück (ähnlich dem Zweikant, aber nur mit einer geraden Fläche) ist ebenfalls denkbar. Die Anbringung der drehspielvermeidenden Mittel auf dem Innenteil bietet Montage- und Bauraumvorteile gegenüber deren ebenfalls mögliche Anbringung auf dem Außenteil.

Eine konventionelle Lösung ist darin zu sehen, dass als drehspielvermeidendes Mittel ein minimales, eng toleriertes Spiel zwischen den Kupplungsflächen des Innen- und Außenteils vorgesehen ist. Die dazu erforderliche Fertigungspräzision bedingt einen entsprechenden Bauaufwand.

Eine kostengünstigere Lösung besteht darin, dass als drehspielvermeidende Mittel vorgespannte Metall- oder Kunststofffedern vorgesehen sind, die das Spiel zwischen den Kupplungsflächen überbrücken. Wegen der Vorspannung der Federn und deren ausreichendem Federweg kann das Spiel zwischen den Kupplungsflächen und seine Toleranz relativ groß gewählt werden, wodurch der Bauaufwand entsprechend verringert wird.

Von Vorteil ist, dass die Metallfedern vorzugsweise als Flachbiege- oder Tellerfedern und die Kunststofffeder vorzugsweise als Polymerband oder als Polymer-O-Ring ausgebildet und vorzugsweise in Nuten bzw. in einer umlaufenden Nut der Kupplungsflächen des Innenteils angeordnet sind. Die Anbringung der Pölymerfedern in Ringnuten der Kupplungsflächen des Innenteils erleichtert vor allem die Montage des Polymerbands und des Polymer-O-Rings, die dort verliersicher angeordnet sind.

Die zur Drehmomentübertragung und Drehspielvermeidung erforderlichen Feder- und Montagekräfte sind relativ niedrig, da das zu übertragende Drehmoment von weniger als 1 Nm relativ gering ist, so dass bei entsprechender Federsteifigkeit kein relatives Verdrehen der Elektromotor- und der Verstellwelle eintritt. Durch die Federn können auch kleine Fluchtungsfehler dieser Wellen ausgeglichen werden. Es hat Vorteile, wenn die Flachbiege- oder Tellerfedern als einteilige Federspange ausgebildet sind, die vorzugsweise an Ecken des Innenteils einrastet. Auf diese Weise bilden die Flachbiege- oder Tellerfedern paarweise eine Einheit, die verliersicher an dem Innenteil befestigt ist und so die Montage des Verstellmotors erleichtert.

Eine vorteilhafte Ausbildung der Erfindung besteht darin, dass die Kupplung als eine Rohrwellenkupplung ausgebildet ist, mit einem hohlzylindrischen Außenteil und einem koaxialen, zylindrischen Innenteil, das mit Spiel im Außenteil angeordnet ist und vorzugsweise die drehspielvermeidenden Mittel aufweist. Die beiden Teile sind als Drehteile ausgebildet, die einfach und kostengünstig zu fertigen sind. Ebenso ist es von Vorteil, dass als drehspielvermeidendes Mittel ein elastisch verformbarer Toleranzring, vorzugsweise aus Metall vorgesehen ist, der in einer Radialnut vorzugsweise am Umfang des koaxialen, zylindrischen Innenteils angeordnet ist und dieses um ein bestimmtes Maß radial überragt. Grundsätzlich könnte der Toleranzring auch auf dem Innenumfang des Außenteils angeordnet sein, jedoch ist die erfindungsgemäße Anordnung montagefreundlicher.

Durch den Überstand der Toleranzhülse entsteht bei der Montage eine federelastische Verformung derselben, die zu einer kraftschlüssigen Verbindung zwischen den Innen- und Außenteil führt. Bei der Wahl des Überstandes muss darauf geachtet werden, dass das Drehmoment des Verstellmotors übertragbar ist, ohne die Axialbewegung des Innen- und Außenteils zueinander und damit die Wärmedehnung wesentlich zu behindern. Der Toleranzring ist auch als Polymerring denkbar.

Durch eine vorteilhafte Ausbildung der Erfindung wird erreicht, dass als drehspielvermeidendes Mittel zumindest eine Rastkugel oder ein vorzugsweise zylindrischer Raststift mit kegelig zu gespitztem Ende vorgesehen sind, die in Radial- bzw. Durchgangsbohrungen vorzugsweise des koaxialen, zylindrischen Innenteils mit Spiel geführt und in zu diesen fluchtenden, anderen Radialbohrungen geringeren Durchmessers im hohlzylindrischen Außenteil unter der Kraft einer Druck- bzw. Durchgangsfeder um ein durch den geringeren Durchmesser begrenztes Maß verschiebbar sind. Anstelle der einen können auch vorteilhafter Weise zwei oder mehrere Rastkugeln bzw. zylindrische Raststifte treten. Diese könnten auch in dem Außenteil angeordnet sein und radial in eine entsprechende Bohrung des Innenteils eingreifen. Alternativ zu den zylindrischen Stiften können auch solche mit beispielsweise quadratischem oder rechteckigem oder auch beliebig anderem Querschnitt Verwendung finden. Auch bei dieser Variante können kleine Fluchtungsfehler zwischen der Verstellmotor- und Verstellwelle ausgeglichen werden. Die Durchgangsbohrung hat gegenüber den beiden Radialbohrungen, die sie ersetzt, den Vorteil einfacherer Fertigung und einer gleichmäßigen Druckbeaufschlagung der Rastkugeln bzw. der Raststifte.

Durch entsprechende Auslegung der Federkraft der Druck- bzw. der Durchgangsfedern und/oder der Kegelwinkel der zylindrischen Stifte, ist das übertragbare Drehmoment der Rohrkupplung begrenzbar. Diese wirkt dann als Sicherheitskupplung, indem bei Überlast die Rastkugeln oder die zylindrischen Raststifte gegen die relativ geringen Federkräfte aus den Bohrungen im Außenteil verdrängt und so die beiden Wellen entkoppelt werden. Für eine Axialbeweglichkeit der mit Rastkugeln oder mit zylindrischen Raststiften ausgerüsteten Rohrwellenkupplung ist es notwendig, dass die anderen Radialbohrungen als in axialer Richtung ausgerichtete Langlöcher ausgebildet sind.

Es ist von Vorteil, wenn die Kupplung als Klauenkupplung ausgebildet ist, deren beide Teile auf gleichem Durchmesser angeordnete, axiale Klauen aufweisen, die ineinandergreifen, wobei zwischen den Klauen Abstände vorgesehen sind, die durch Zahnelemente eines elastischen, vorgespannten Polymerkranzes drehspielfrei überbrückt sind. Die Klauenkupplung ermöglicht aufgrund der Elastizität des Polymerkranzes auch den Ausgleich eines geringen Achsversatzes. Außerdem wirkt sie schwingungsdämpfend.

Eine weitere vorteilhafte Kupplung ist als Profilwellenkupplung, vorzugsweise als Zahnwellenkupplung, ausgebildet, deren Innen- oder Außenteil, insbesondere deren Innen- oder Außenverzahnung, aus elastischem Kunststoff ausgebildet ist. In Anbetracht des relativ geringen zu übertragenden Drehmoments sind vielerlei Kupplungen, beispielsweise Polygon- oder Mehrkantwellenkupplungen, zur halbseitigen Ausführung in Kunststoff geeignet. Die Zahnwellenkupplung zeichnet sich durch besonders einfache Montierbarkeit aus. Auch ermöglicht sie aufgrund des elastischen Kunststoffzahnkranzes den Ausgleich eines geringen Achsversatzes. Ebenso wirkt sie schwingungsdämpfend durch die Eigendämpfung des Kunststoffs.

Für eine rationelle Fertigung und für eine kompakte Bauweise ist es von Vorteil, dass die aus Kunststoff bestehende Innen- oder Außenverzahnung direkt auf entsprechende Teile der Zahnwellenkupplung oder auf eine entsprechend ausgebildete metallische Zwischenbüchse aufvulkanisiert sind und dass die Zwischenbüchse mit der Zahnwellenkupplung vorzugsweise durch Presssitz verbunden ist.

Eine vorteilhafte Ausbildung der Erfindung besteht darin, dass die Kupplung als Magnetwellenkupplung ausgebildet ist, deren beide Teile gegenüberliegende Dauermagnete aufweisen, die das Antriebsmoment des Verstellmotors durch Magnetkräfte berührungslos und drehspielfrei von der Verstellmotorwelle auf die Verstellwelle übertragen. Die Dauermagnete können aus ferritischem oder Seltenerd-Material, wie Samarium-Kobalt oder Neodym-Eisen-Bor hergestellt sein. Aufgrund des von der Verstellmotorwelle auf die Verstellwelle zu übertragenden geringen Drehmoments, wird diese von der Magnetkraft annähernd synchron, dass heißt verdrehspielfrei, mitgenommen. Auch diese Kupplung kann als Sicherheitskupplung ausgebildet sein, die bei Überlast durchrutscht. Da es sich um eine berührungslose Kupplung handelt, wird das Drehmoment vibrationsarm übertragen. Außerdem kann auch ein geringer Achsversatz ausgeglichen werden.

Es hat Vorteile, wenn die Dauermagnete vorzugsweise axial angeordnet sind und zwischen ihnen eine unmagnetische Membran mit beidseitigem Spiel vorgesehen ist, die den Verstellmotor öldicht abschließt. Bei axialer Anordnung der Magnete muss darauf geachtet werden, dass deren für die Übertragung des Drehmoments zulässiger Höchstabstand nicht überschritten wird. Andererseits dürfen die Dauermagnete die Membran nicht berühren. Die ebenfalls mögliche radiale Anordnung der Magnete ist demgegenüber gegen axiale Verschiebung weitestgehend unempfindlich, jedoch ist die Ausbildung einer Membran zwischen diesen Dauermagneten schwieriger.

In einer ersten Ausführungsform eines Nockenwellenverstellers nach dem Oberbegriff des Anspruchs 1 wird die Aufgabe erfingdungsgemäß dadurch gelöst, dass vorzugsweise an letzterem drehspielvermeidende Mittel vorgesehen sind. In einer Konkretisierung der Erfindung wird vorgeschlagen, als drehspielvermeidende Mittel vorgespannte Metall- oder Kunststofffedern vorzusehen, die das Spiel zwischen den Kupplungsflächen überbrücken.

In einer weiteren Konkretisierung der Erfindung wird vorgeschlagen, dass die Metallfedern vorzugsweise als Flachbiege- oder Tellerfedem und die Kunststofffedern vorzugsweise als Polymerband oder als Polymer-O-Ring ausgebildet und vorzugsweise in Nuten bzw. einer umlaufenden Nut der Kupplungsflächen des Innenteils angeordnet sind.

Die bewährte Zweikantwellenkupplung bietet ausreichend Platz zur Unterbringung von drehmomentübertragenden und drehspielvermeidenden Mitteln. Als Kupplungen kommen auch Passfeder- und Profilwellenkupplungen wie Polygon-, Zahn-, Keil- und Mehrkant-Wellenkupplungen in Frage. Auch eine einseitig abgefräste Welle mit entsprechendem Gegenstück (ähnlich dem Zweikant, aber nur mit einer geraden Fläche) ist ebenfalls denkbar. Die Anbringung der drehspielvermeidenden Mittel auf dem Innenteil bietet Montage- und Bauraumvorteile gegenüber deren ebenfalls mögliche Anbringung auf dem Außenteil. Wegen der Vorspannung der Federn und deren ausreichendem Federweg kann das Spiel zwischen den Kupplungsflächen und seine Toleranz relativ groß gewählt werden, wodurch der Bauaufwand entsprechend verringert wird.

Die Anbringung der Polymerfedem in Ringnuten der Kupplungsflächen des Innenteils erleichtert vor allem die Montage des Polymerbands und des Polymer-O-Rings, die dort verliersicher angeordnet sind.

Die zur Drehmomentübertragung und Drehspielvermeidung erforderlichen Feder- und Montagekräfte sind relativ niedrig, da das zu übertragende Drehmoment von weniger als 1 Nm relativ gering ist, so dass bei entsprechender Federsteifigkeit kein relatives Verdrehen der Elektromotor- und der Verstellwelle eintritt. Durch die Federn können auch kleine Fluchtungsfehler dieser Wellen ausgeglichen werden. Es hat Vorteile, wenn die Flachbiege- oder Tellerfedem als einteilige Federspange ausgebildet sind, die vorzugsweise an Ecken des Innenteils einrastet. Auf diese Weise bilden die Flachbiege- oder Tellerfedem paarweise eine Einheit, die verliersicher an dem Innenteil befestigt ist und so die Montage des Verstellmotors erleichtert.

In einer weiteren Ausführungsform eines Nockenwellenverstellers nach dem Oberbegriff des Anspruchs 5 wird die Aufgabe erfindungsgemäß dadurch gelöst, dass die Kupplung als eine Rohrwellenkupplung ausgebildet ist, mit einem hohlzylindrischen Außenteil und einem koaxialen, zylindrischen Innenteil, das mit Spiel im Außenteil angeordnet ist und vorzugsweise die drehspielvermeidenden Mittel aufweist.

Die beiden Teile sind als Drehteile ausgebildet, die einfach und kostengünstig zu fertigen sind. Ebenso ist es von Vorteil, dass als drehspielvermeidendes Mittel ein elastisch verformbarer Toleranzring, vorzugsweise aus Metall vorgesehen ist, der in einer Radialnut vorzugsweise am Umfang des koaxialen, zylindrischen Innenteils angeordnet ist und dieses um ein bestimmtes Maß radial überragt. Grundsätzlich könnte der Toleranzring auch auf dem Innenumfang des Außenteils angeordnet sein, jedoch ist die erfindungsgemäße Anordnung montagefreundlicher.

Durch den Überstand der Toleranzhülse entsteht bei der Montage eine federelastische Verformung derselben, die zu einer kraftschlüssigen Verbindung zwischen den Innen- und Außenteil führt. Bei der Wahl des Überstandes muss darauf geachtet werden, dass das Drehmoment des Verstellmotors übertragbar ist, ohne die Axialbewegung des Innen- und Außenteils zueinander und damit die Wärmedehnung wesentlich zu behindern. Der Toleranzring ist auch als Polymerring denkbar.

Alternativ kann als drehspielvermeidende Mittel zumindest eine Rastkugel oder ein vorzugsweise zylindrischer Raststift mit kegelig zugespitztem Ende vorgesehen sein, die in Radial- bzw. Durchgangsbohrungen vorzugsweise des koaxialen, zylindrischen Innenteiles mit Spiel geführt und in zu diesen fluchtenden, anderen Radialbohrungen geringeren Durchmessers im hohlzylindrischen Außenteil unter der Kraft einer Druck- bzw. Durchgangsfeder um ein durch den geringeren Durchmesser begrenztes Maß verschiebbar sind.

Anstelle der einen können auch vorteilhafter Weise zwei oder mehrere Rastkugeln bzw. zylindrische Raststifte treten. Diese könnten auch in dem Außenteil angeordnet sein und radial in eine entsprechende Bohrung des Innenteils eingreifen. Alternativ zu den zylindrischen Stiften können auch solche mit beispielsweise quadratischem oder rechteckigem oder auch beliebig anderem Querschnitt Verwendung finden. Auch bei dieser Variante können kleine Fluchtungsfehler zwischen der Verstellmotor- und Verstellwelle ausgeglichen werden. Die Durchgangsbohrung hat gegenüber den beiden Radialbohrungen, die sie ersetzt, den Vorteil einfacherer Fertigung und einer gleichmäßigen Druckbeaufschlagung der Rastkugeln bzw. der Raststifte.

Durch entsprechende Auslegung der Federkraft der Druck- bzw. der Durchgangsfedem und/oder der Kegelwinkel der zylindrischen Stifte, ist das übertragbare Drehmoment der Rohrkupplung begrenzbar. Diese wirkt dann als Sicherheitskupplung, indem bei Überlast die Rastkugeln oder die zylindrischen Raststifte gegen die relativ geringen Federkräfte aus den Bohrungen im Außenteil verdrängt und so die beiden Wellen entkoppelt werden. Für eine Axialbeweglichkeit der mit Rastkugeln oder mit zylindrischen Raststiften ausgerüsteten Rohrwellenkupplung ist es notwendig, dass die anderen Radialbohrungen als in axialer Richtung ausgerichtete Langlöcher ausgebildet sind.

In einer weiteren Ausführungsform eines Nockenwellenverstellers nach dem Oberbegriff des Anspruchs 9 wird die Aufgabe erfindungsgemäß dadurch gelöst, dass die Kupplung als Klauenkupplung ausgebildet ist, deren beide Teile auf gleichem Durchmesser angeordnete, axiale Klauen aufweisen, die ineinander greifen, wobei zwischen den Klauen Abstände vorgesehen sind, die durch Zahnelemente eines elastischen, vorgespannten Polymerkranzes drehspielfrei überbrückt sind.

Die Klauenkupplung ermöglicht aufgrund der Elastizität des Polymerkranzes auch den Ausgleich eines geringen Achsversatzes. Außerdem wirkt sie schwingungsdämpfend.

In einer weiteren Ausführungsform eines Nockenwellenverstellers nach dem Oberbegriff des Anspruchs 10 wird die Aufgabe erfindungsgemäß dadurch gelöst, dass die Kupplung als Profilwellenkupplung, vorzugsweise als Zahnwellenkupplung, ausgebildet ist, deren Außen- oder Innenteil, insbesondere deren Innen- oder Außenverzahnung aus elastischem Kunststoff ausgebildet ist.

In Anbetracht des relativ geringen zu übertragenden Drehmoments sind vielerlei Kupplungen, beispielsweise Polygon- oder Mehrkantwellenkupplungen, zur halbseitigen Ausführung in Kunststoff geeignet. Die Zahnwellenkupplung zeichnet sich durch besonders einfache Montierbarkeit aus. Auch ermöglicht sie aufgrund des elastischen Kunststoffzahnkranzes den Ausgleich eines geringen Achsversatzes. Ebenso wirkt sie schwingungsdämpfend durch die Eigendämpfung des Kunststoffs.

Für eine rationelle Fertigung und für eine kompakte Bauweise ist es von Vorteil, dass die aus Kunststoff bestehende Innen- oder Außenverzahnung direkt auf entsprechende Teile der Zahnwellenkupplung oder auf eine entsprechend ausgebildete metallische Zwischenbüchse aufvulkanisiert sind und dass die Zwischenbüchse mit der Zahnwellenkupplung vorzugsweise durch Presssitz verbunden ist.

In einer weiteren Ausführungsform eines Nockenwellenverstellers nach dem Oberbegriff des Anspruchs 10 wird die Aufgabe erfindungsgemäß dadurch gelöst, dass die Kupplung als Magnetwellenkupplung ausgebildet ist, deren beide Teile gegenüberliegende Dauermagnete aufweisen, die das Antriebsmoment des Verstellmotors durch Magnetkräfte berührungslos und drehspielfrei von der Verstellmotorwelle auf die Verstellwelle übertragen.

Die Dauermagnete können aus ferritischem oder Seltenerd-Material, wie Samarium-Kobalt oder Neodym-Eisen-Bor hergestellt sein. Aufgrund des von der Verstellmotorwelle auf die Verstellwelle zu übertragenden geringen Drehmoments, wird diese von der Magnetkraft annähernd synchron, dass heißt verdrehspielfrei, mitgenommen. Auch diese Kupplung kann als Sicherheitskupplung ausgebildet sein, die bei Überlast durchrutscht. Da es sich um eine berührungslose Kupplung handelt, wird das Drehmoment vibrationsarm übertragen. Außerdem kann auch ein geringer Achsversatz ausgeglichen werden.

Es hat Vorteile, wenn die Dauermagnete vorzugsweise axial angeordnet sind und zwischen ihnen eine unmagnetische Membran mit beidseitigem Spiel vorgesehen ist, die den Verstellmotor öldicht abschließt. Bei axialer Anordnung der Magnete muss darauf geachtet werden, dass deren für die Übertragung des Drehmoments zulässiger Höchstabstand nicht überschritten wird. Andererseits dürfen die Dauermagnete die Membran nicht berühren. Die ebenfalls mögliche radiale Anordnung der Magnete ist demgegenüber gegen axiale Verschiebung weitestgehend unempfindlich, jedoch ist die Ausbildung einer Membran zwischen diesen Dauermagneten schwieriger.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: einen Nockenwellenversteller mit getrenntem elektrischen Verstellmotor und Verstellgetriebe, die durch eine Zweikantwellenkupplung lösbar verbunden sind;
- Figur 2: eine Zweikantwellenkupplung gemäß Einzelheit X von Figur 1 im Querschnitt;
- Figur 3: einen Längsschnitt durch die Zweikantwellenkupplung von Figur 2;
- Figur 4: einen Längsschnitt durch eine Zweikantwellenkupplung ähnlich Figur 3, jedoch mit drehmomentübertragenden und drehspielvermeidenden Metallfedern;
- Figur 5: einen Querschnitt durch die Zweikantwellenkupplung von Figur 4;
- Figur 6: einen Querschnitt durch eine Zweikantwellenkupplung ähnlich Figur 5, jedoch mit einteiliger Federspange;
- Figur 7: einen Längsschnitt durch eine Zweikantwellenkupplung ähnlich Figur 4, jedoch mit einem Flachband als Polymerfeder;
- Figur 8: einen Längsschnitt durch eine Zweikantwellenkupplung ähnlich Figur 7, jedoch mit einem O-Ring als Polymerfeder;
- Figur 9: einen Querschnitt X-X durch die Zweikantwellenkupplung von Figur 7 und 8;
- Figur 10: einen Querschnitt durch eine Rohrwellenkupplung mit zwei gegenüberliegenden, federbelasteten Rastkugeln in getrennten Radialbohrungen eines koaxialen, zylindrischen Innenteils;
- Figur 11: einen Querschnitt durch eine Rohrwellenkupplung ähnlich Figur 10, jedoch mit einer radialen Durchgangsbohrung, in der eine Durchgangsfeder für die beiden Rastkugeln angeordnet ist;
- Figur 12: einen Querschnitt durch eine Rohrwellenkupplung ähnlich Figur 10, jedoch mit zwei zylindrischen Raststiften anstelle der beiden Rastkugeln;
- Figur 13: einen Querschnitt durch eine Rohrwellenkupplung ähnlich Figur 11, jedoch mit zwei zylindrischen Raststiften anstelle der beiden Rastkugeln;
- Figur 14: einen Längsschnitt durch eine Rohrwellenkuppplung, mit einem zylindrischen Innenteil, das an seinem Außenumfang eine Ringnut aufweist; in der sich ein elastisch verformbarer Toleranzring aus Metall befindet;
- Figur 15: einen Teillängsschnitt durch eine Klauenkupplung;
- Figur 16: eine axiale Ansicht der Klauenkupplung von Figur 15;
- Figur 17: eine Ansicht eines Elastomerkranzes der Klauenkupplung von Figur 15 und 16;
- Figur 18: eine axiale Ansicht eines Außenteils einer Zahnwellenkupplung mit einer Innenverzahnung aus Kunststoff;
- Figur 19: ein Teillängsschnitt des Außenteils von Figur 18 mit der Innenverzahnung aus Kunststoff;
- Figur 20: eine axiale Ansicht eines zum Außenteil der Figur 18 und 19 passenden Innenteils mit einer Außenverzahnung aus Metall;
- Figur 21: eine Seitenansicht des Innenteils von Figur 20;
- Figur 22: einen Längsschnitt durch einen Nockenwellenversteller ähnlich Figur 1, jedoch mit einer Magnetwellenkupplung anstelle der Zweikantwellenkupplung.

### Ausführliche Beschreibung der Erfindung

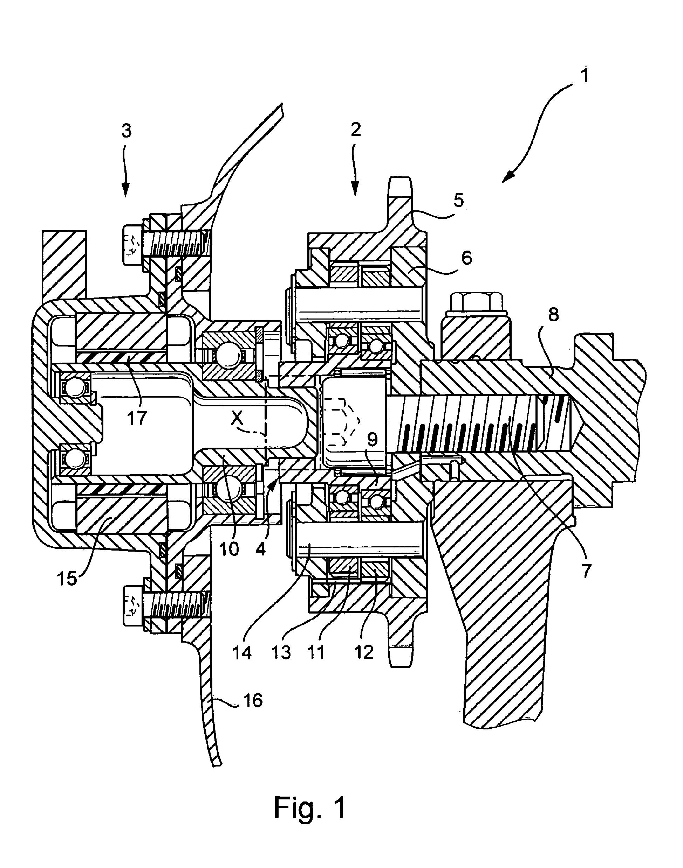

In Figur 1 ist ein elektrischer Nockenwellenversteller 1 mit einem Verstellgetriebe 2 und einem elektrischen Verstellmotor 3 dargestellt, die als getrennte Einheiten ausgebildet und durch eine Kupplung lösbar verbunden sind.

Das Verstellgetriebe 2 ist ein Dreiwellengetriebe, das als Exzentergetriebe eine hohe Untersetzung (Untersetzungsbereich von 1 : 30 bis 1: 250) und einen hohen Wirkungsgrad aufweist. Das Verstellgetriebe 2 besitzt eine Antriebs-und eine Abtriebswelle sowie eine Verstellwelle 9. Die Antriebswelle ist als Kettenrad 5 ausgebildet und steht mit einer nicht dargestellten Kurbelwelle über eine ebenfalls nicht dargestellte Kette in drehfester Verbindung. Die Abtriebswelle ist als Abschlusswand 6 ausgeführt, die mittels einer Spannschraube 7 drehfest mit einer Nockenwelle 8 verbunden ist. Die Verstellwelle 9 ist als Exzenterwelle ausgebildet, die über eine Zweikantwellenkupplung 4 mit einer Verstellmotorwelle 10 praktisch drehspielfrei, jedoch axial verschiebbar verbunden ist. Die Verstellwelle 9 dient zum Antrieb zweier Stirnräder 11, 12, die mit einer Innenverzahnung 13 des Kettenrades 5 kämmen und das Verstellmoment über Stifte 14 und über die Abschlusswand 6 auf die Nockenwelle 8 übertragen. Der elektrische Verstellmotor 3 besitzt einen Stator 15, der am Zylinderkopf 16 befestigt ist und einen Dauermagnetrotor 17, der sich mit der Nockenwelle 8 dreht.

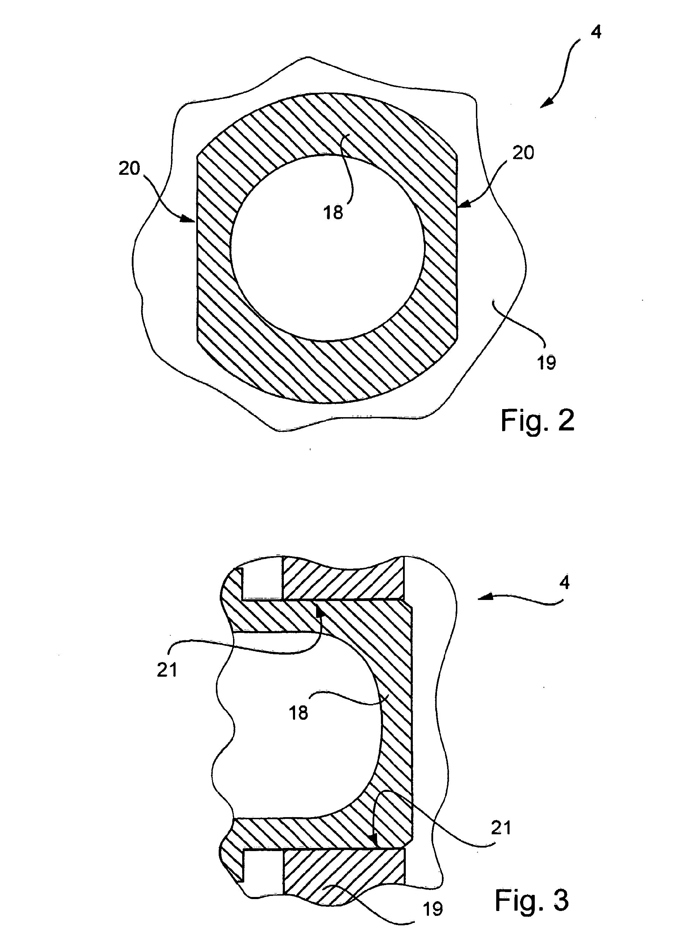

In den Figuren 2 und 3 ist die als Einzelheit X bezeichnete Zweikantwellenkupplung 4 der Figur 1 im Quer- und Längsschnitt vergrößert dargestellt. Ein Innenteil 18 der Zweikantwellenkupplung 4 ist mit der Verstellmotorwelle 10, ein Außenteil 19 mit der Verstellwelle 9 einteilig ausgebildet. Beide Teile 18, 19 weisen jeweils gleiche Kupplungsflächen 20, 21 auf, zwischen denen das für eine Axialverschiebung (Wärmedehnung, Montage) erforderliche Minimalspiel vorgesehen ist. Auf diese Weise wird auch ein minimales Verdrehspiel erreicht, dass für die Haltbarkeit und Geräuscharmut der mit Wechselmomenten beaufschlagten Zweikantwellenkupplung 4 wichtig ist. Der für die geringen Spiele und Toleranzen an beiden Teilen 18, 19 erforderliche Fertigungsaufwand ist jedoch beträchtlich.

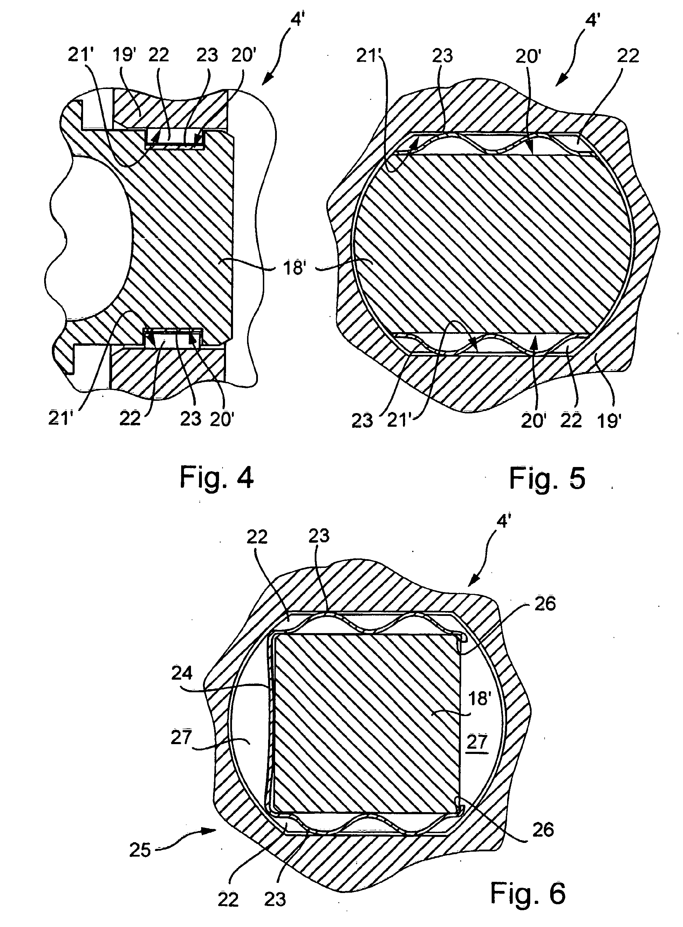

Diesem Nachteil wird durch eine in Längs- und Querschnitt dargestellte Zweikantwellenkupplung 4' der Figuren 4 und 5 begegnet. Hierbei ist in den Kupplungsflächen 20' der Innenteile 18' je einer Nut 22 vorgesehen, in die eine Flachbiege- oder eine Tellerfeder 23 mit Vorspannung eingesetzt ist. Die Federn 23 überbrücken durch die Vorspannung und den Federweg das nunmehr zulässige, relativ große Spiel zwischen dem Innen- und einem Außenteil 18', 19' und übernehmen die Übertragung des Drehmoments des Verstellmotors 3. Da dieses mit <1 Nm relativ gering ist, sind auch die benötigten Feder- und Montagekräfte gering und es tritt bei entsprechender Federsteifigkeit kein Verdrehen zwischen Verstell- und Verstellmotorwelle 9, 10 auf. Da das Drehmoment des Verstellmotors 3 nur über die Federn 23 übertragen wird, berühren sich die Kupplungsflächen 20', 21' der Teile 18', 19' nicht. Die Federn 23 sind in Verbindung mit dem relativ großen Spiel zwischen dem Kupplungsflächen 20', 21' in der Lage, kleine Achsversätze zwischen der Verstell- und der Verstellmotorwelle 9, 10 auszugleichen.

Figur 6 zeigt eine Kupplung 4' als Variante zu Figur 4 und 5, bei der die beiden Federn 23 und die Nuten 22 des Innenteils 18' durch einen Federbügel 24 zu einer einteiligen Federspange 25 vereinigt sind, die an Ecken 26 des Innenteils 18' unverlierbar einrastet. Diese Verliersicherung bedeutet eine erhebliche Montageerleichterung.

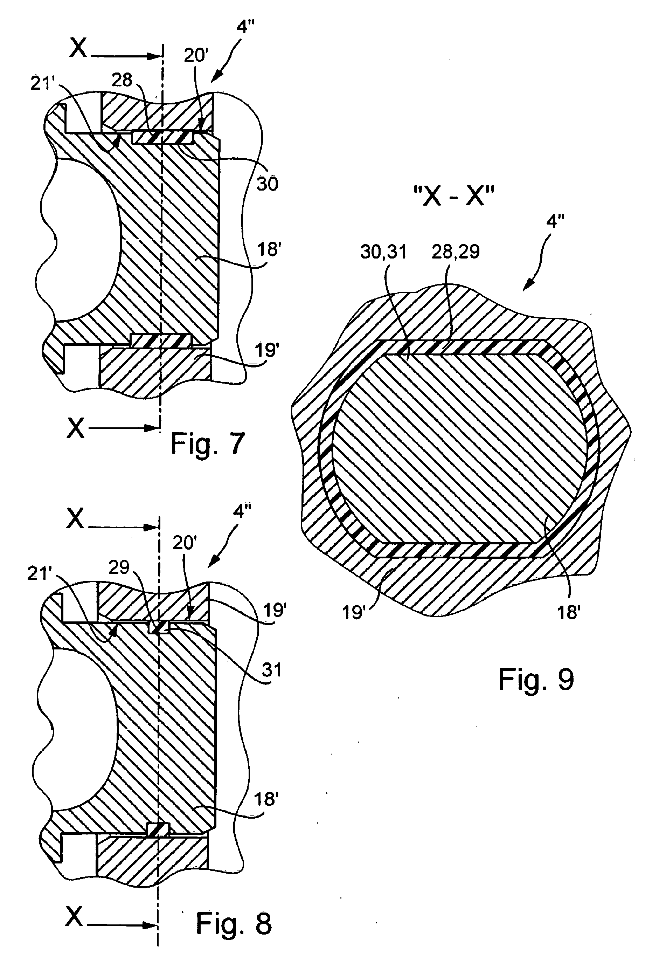

In den Figuren 7 und 8 ist eine Zweikantwellenkupplung 4" im Längsschnitt und in Figur 9 im Querschnitt dargestellt, bei der anstelle der Flachbiege- oder Tellerfedern 23 ein Polymerband 28 oder ein Polymer-O-Ring 29 vorgesehen sind. Diese sind in einer umlaufenden Nut 30, 31 der Innenteile 18' zu deren Kupplungsflächen 20' mit Überstand montiert, so dass sie im Einbauzustand eine Vorspannung aufweisen. Dadurch ist das auch bei dieser Variante große Spiel zwischen den Kupplungsflächen 20', 21' der Innen- und Außenteile 18',19' überbrückt, ohne dass diese sich berühren. Auch hier wird das relativ niedrige Drehmoment des Verstellmotors 3 bei entsprechender Steifigkeit des Polymerbands 28 und des Polymer-O-Rings 29 ohne Relativverdrehung der Innen- und Außenteile 18', 19' übertragen.

In Figur 9 ist die umlaufende Nut 30, 31 im Innenteil 18' mit dem Polymerband 28 und dem Polymer-O-Ring 29 zu erkennen, die eine optimale Spielüberbrückung zwischen den Innenteilen 18' und den Außenteilen 19' der Kupplung 4" bewirken.

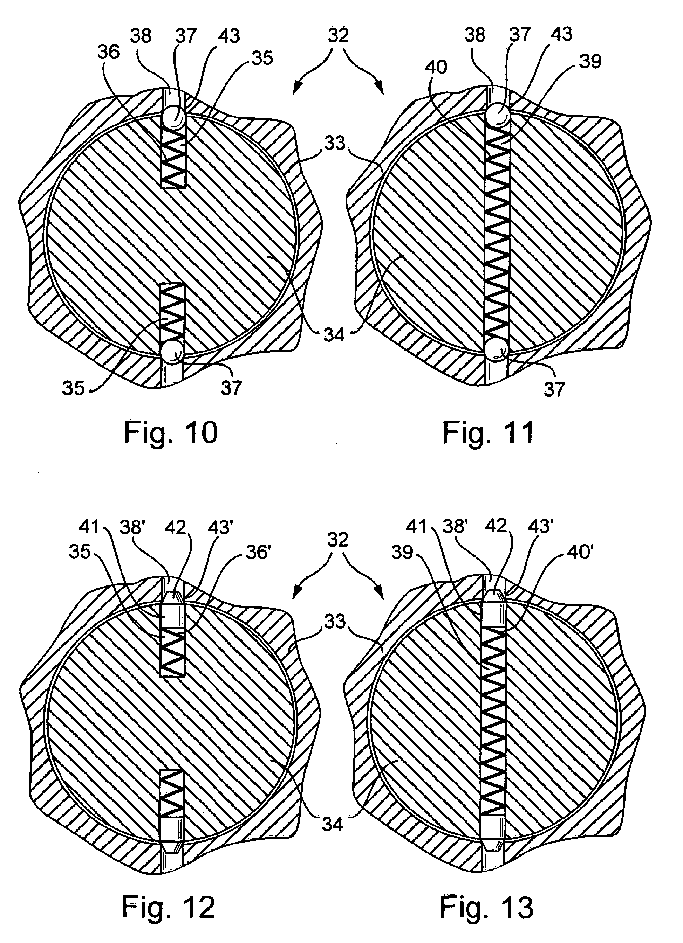

Die Figuren 10 bis 13 zeigen Querschnitte durch eine Rohrwellenkupplung 32 mit einem hohlzylindrischen Außenteil 33 und einem koaxialen, zylindrischen Innenteil 34, das mit Spiel im hohlzylindrischen Außenteil 33 angeordnet ist.

Im zylindrischen Innenteil 34 der Figur 10 sind zwei gleiche, von dessen Umfang ausgehende, fluchtende Radialbohrungen 35 vorgesehen, in denen je eine Druckfeder 36 angeordnet ist. Diese wirken auf je eine Rastkugel 37 ein, die in den Radialbohrungen 35 mit Spiel geführt sind und verdrängen diese in je eine andere Radialbohrung 38 in dem Außenteil 33. Die anderen Radialbohrungen 38 fluchten in einer bestimmten Drehstellung des zylindrischen Innenteils 34 mit den Radialbohrungen 35. Aufgrund eines bestimmten, geringeren Durchmessers der anderen Radialbohrungen 38 gegenüber den Radialbohrungen 35, dringen die Rastkugeln 37 nur bis zu einer bestimmten Tiefe in die andere Radialbohrung 38 ein, die zur Übertragung des Drehmoments des Verstellmotors 3 ausreicht. Die Rastkugeln tragen dabei auf einer Austrittskante 43 der anderen Radialbohrung 38. Durch Wahl des Durchmessers der anderen Radialbohrung 38 kann die Höhe des übertragbaren Drehmoments bestimmt werden. Auf diese Weise wird die Rohrwellenkupplung 32 zur Sicherheitskupplung.

In Figur 11 sind die beiden Radialbohrungen 35 durch eine Durchgangsbohrung 39 mit einer Durchgangsfeder 40 ersetzt. Diese Lösung hat gegenüber der von Figur 10 den Vorteil eines geringeren Bauaufwands und einer gleichmäßigen Druckbelastung der beiden Rastkugeln 37, die eine genauere Festlegung des übertragbaren Drehmoments erlaubt.

Der Aufbau der Rohrwellenkupplungen 32 der Figur 12 und 13 entspricht dem der Figuren 10 und 11. Der Unterschied besteht in der Verwendung von zylindrischen Raststiften 41 anstelle der Rastkugeln 37, mit kegelig zugespitzten Enden 42, die mittels der Druckkraft der Druckfedern 36' bzw. der Durchgangsfeder 40' in der Durchgangsbohrung 39 in andere Radialbohrungen 38' hineinragen und an deren Austrittskante 43' tragen. Bei dieser Variante kann das übertragbare Drehmoment über die Größe des Kegelwinkels des kegelig zugespitzten Endes 42 begrenzt werden. Dadurch kann auch diese Rohrwellenkupplung 32 als Sicherheitskupplung dienen.

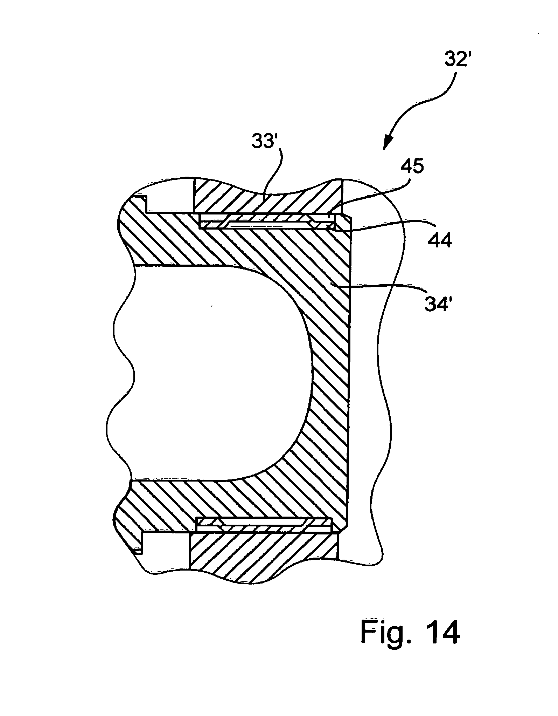

In Figur 14 ist als weitere Kupplungsvariante eine Rohrwellenkupplung 32' dargestellt. Hierbei wird eine kraftschlüssige Momentenübertragung zwischen einem zylindrischen Innenteil 34' und einem hohlzylindrischen Außenteil 33' durch einen in einer Radialnut 45 angeordneten, elastisch verformbaren Toleranzring 44 aus Metall erreicht. Der Toleranzring 44 überragt die Radialnut 45 um ein bestimmtes Maß, dass die elastische Verformung und den davon abhängigen Kraftschluss bestimmt.

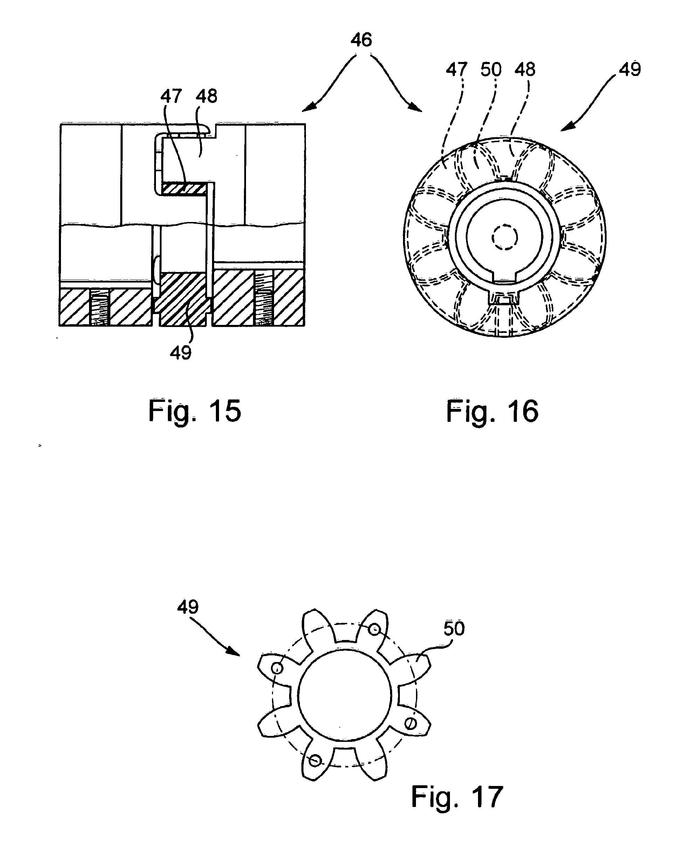

In Figur 15 ist ein Teilquerschnitt durch eine Klauenkupplung 46 mit Klauen 47, 48 dargestellt. Diese sind an den freien Enden der Verstell- und Verstellmotorwelle 9, 10 auf gleichem Durchmesser verdrehfest angeordnet. Sie greifen mit Abständen ineinander, die durch einen in Figur 17 dargestellten elastischen, vorgespannten Polymerkranz 49 mit Zahnelementen 50 drehspielfrei überbrückt sind.

Die Figur 16 zeigt eine axiale Ansicht der Klauenkupplung 46, bei der je acht Klauen 47 und 48 sowie der Polymerkranz 49 mit acht Zahnsegmenten 50 gestrichelt dargestellt sind. Die Klauenkupplung 46 gleicht kleine Fluchtungsfehler zwischen der Verstell- und der Verstellmotorwelle 9, 10 aus, und gestattet auch eine kleine axiale Verschiebung zwischen denselben.

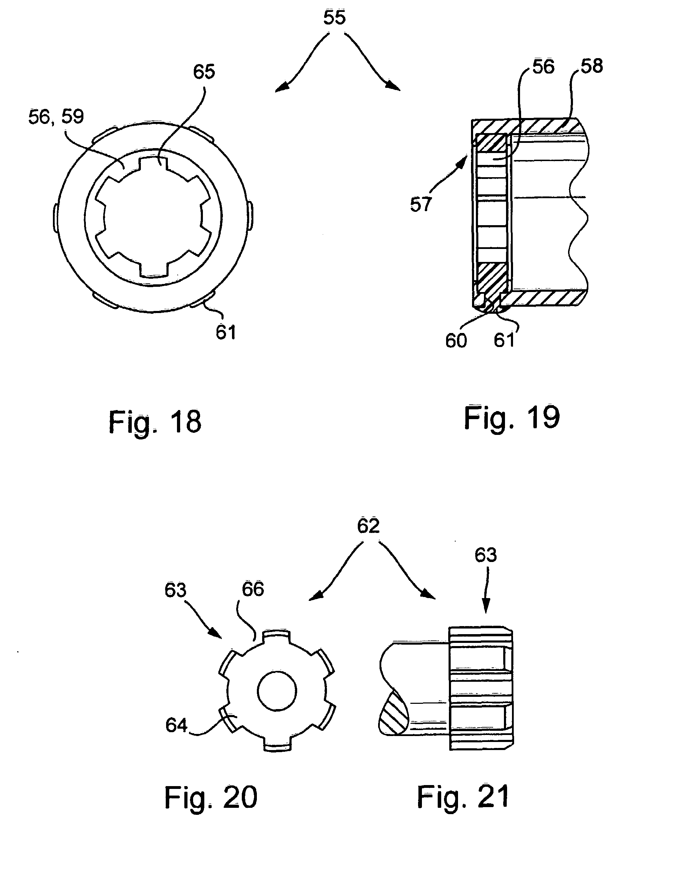

In Figur 18 ist eine axiale Ansicht eines Außenteils 55 einer Zahnwellenkupplung mit einer Innenverzahnung 56 aus elastischem Kunststoff dargestellt. Die Figur 19 zeigt einen Teillängsschnitt des Außenteils 55 von Figur 18. Die Innenverzahnung 56 ist in einer Radialnut 57 einer Zwischenbüchse 58 einvulkanisiert. In radialer Verlängerung ist hinter jedem Zahn 59 eine Radialbohrung 60 vorgesehen, die mit dem Kunststoff gefüllt und durch einen nietkopfähnlichen Deckel 61 abgeschlossen ist. Der in der Radialbohrung 60 befindliche Kunststoff erhöht das übertragbare Drehmoment der Innenverzahnung 56. Die Zwischenbüchse 58 kann als Teil der Verstellwelle 9 oder der Verstellmotorwelle 10 dienen oder in diese eingepresst werden.

Die Figuren 20 und 21 zeigen ein Innenteil 62 aus Metall mit einer Außenverzahnung 63, die Außenzähne 64 aufweist. Diese sind schmaler als die Innenzähne 59 aus Kunststoff, da sie eine höhere Festigkeit aufweisen. Entsprechend sind die Innenzahnlücken 65 schmaler als die Außenzahnlücken 66. Grundsätzlich könnte auch die Außenverzahnung 63 in Kunststoff ausgebildet werden. Es bietet sich jedoch die Innenverzahnung 56 wegen des möglichen größeren Materialvolumens dafür an.

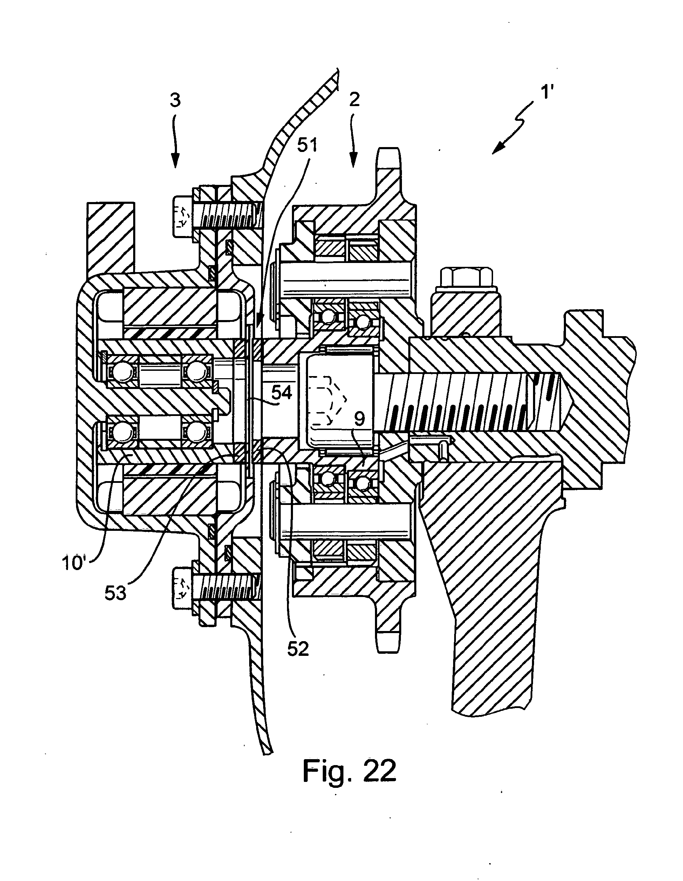

Die Figur 22 zeigt einen Nockenwellenversteller 1', dessen Verstellwelle 9 mit der Verstellmotorwelle 10' durch eine Dauermagnetwellenkupplung 51 berührungslos und drehspielfrei verbunden sind. An den freien Enden der Verstell-und Verstellmotorwelle 9, 10' sind Dauermagnete 52, 53 befestigt, zwischen denen eine unmagnetische Membran 54 verläuft, die den Verstellmotor 3 öldicht abschließt. Auf diese Weise ist der Verstellmotor 3 ohne reibungserzeugende Dichtelemente hermetisch abgeschlossen.

### Bezugszeichenliste

- 1,1': Nockenwellenversteller
- 2: Verstellgetriebe
- 3: elektrischer Verstellmotor
- 4, 4', 4": Zweikantwellenkupplung
- 5: Kettenrad
- 6: Abschlusswand
- 7: Spannschraube
- 8: Nockenwelle
- 9: Verstellwelle
- 10,10': Verstellmotorwelle
- 11: Stirnrad
- 12: Stirnrad
- 13: Innenverzahnung
- 14: Stift
- 15: Stator
- 16: Zylinderkopf
- 17: Dauermagnetrotor
- 18, 18': Innenteil
- 19, 19': Außenteil
- 20, 20': Kupplungsfläche
- 21, 21': Kupplungsfläche
- 22: Nut
- 23: Flachbiege- oder Tellerfeder
- 24: Federbügel
- 25: Federspange
- 26: Ecke
- 27: Quernut
- 28: Polymerband
- 29: Polymer-O-Ring
- 30: umlaufende Nut
- 31: umlaufende Nut
- 32, 32': Rohrwellenkupplung
- 33, 33': hohlzylindrisches Außenteil
- 34,34': koaxiales zylindrisches Innenteil
- 35: Radialbohrung
- 36, 36': Druckfeder
- 37: Rastkugel
- 38, 38': andere Radialbohrung
- 39: Durchgangsbohrung
- 40,40': Durchgangsfeder
- 41: zylindrischer Raststift
- 42: kegelig zugespitztes Ende
- 43, 43': Austrittskante
- 44: Toleranzring
- 45: Radialnut
- 46: Klauenkupplung
- 47: Klaue
- 48: Klaue
- 49: Polymerkranz
- 50: Zahnelement
- 51: Dauermagnetwellenkupplung
- 52: Dauermagnet
- 53: Dauermagnet
- 54: Membran
- 55: Außenteil
- 56: Innenverzahnung
- 57: Radialnut
- 58: Zwischenbüchse
- 59: Innenzahn
- 60: Radialbohrung
- 61: Deckel
- 62: Innenteil
- 63: Außenverzahnung
- 64: Außenzahn
- 65: Innenzahnlücken
- 66: Außenzahnlücken

## Patentansprüche

1. Nockenwellenversteller (1, 1') zum Verstellen und Fixieren der relativen Drehwinkellage einer Nockenwelle (8) gegenüber der Kurbelwelle einer Hubkolbenbrennkraftmaschine, mit einem hoch übersetzenden und reibungsarmen Verstellgetriebe (2), dass eine mit der Kurbelwelle verdrehfest verbundene Antriebswelle, eine mit der Nockenwelle (8) verdrehfest verbundene Abtriebswelle und eine mit einer Verstellmotorwelle (10) eines Verstellmotors verbundene Verstellwelle (9) aufweist, wobei das Verstellgetriebe (2) und der Verstellmotor (3) als getrennte Einheiten ausgebildet und durch eine drehspielfreie, lösbare Kupplung (4, 4', 4"; 32, 32'; 46; 51) miteinander verbunden sind, wobei der Verstellmotor ein elektrischer Verstellmotor (3) ist, die Kupplung (4, 4', 4"; 32, 32'; 46, 51) zwei zusammenfügbare Teile aufweist, von denen eines mit der Verstellmotorwelle (10) und das andere mit der Verstellwelle (9) drehfest verbunden beziehungsweise mit den Wellen (9, 10) einstückig ausgebildet ist, wobei eines der beiden Teile als Außenteil (19, 19'; 33, 33') das andere als Innenteil (18, 18'; 34, 34') ausgebildet ist, wobei die beiden Teile drehspielfrei ineinander steckbar sind. und wobei die Kupplung als Zweikantwellenkupplung (4, 4', 4") ausgebildet ist, die je zwei Kupplungsflächen (21, 21') am Außenteil (19, 19') und je zwei Kupplungsflächen (20, 20') am Innenteil (18, 18') aufweist, **dadurch gekennzeichnet, dass** am letzteren als drehspielvermeidendes Mittel ein minimales, eng toleriertes Spiel zwischen den Kupplungsflächen (20, 21) des Innen- und Außenteils (18, 19) vorgesehen ist.

## Claims

1. Camshaft adjuster (1, 1') for adjusting and fixing the relative rotational angle position of a camshaft (8) with respect to the crankshaft of a reciprocating-piston internal combustion engine, having a low-friction step-up adjusting gearing (2) which has a drive input shaft which is rotationally fixedly connected to the crankshaft, a drive output shaft which is rotationally fixedly connected to the camshaft (8), and an adjusting shaft (9) which is connected to an adjusting motor shaft (10) of an adjusting motor, with the adjusting gearing (2) and the adjusting motor (3) being formed as separate units and being connected to one another by means of a releasable coupling (4, 4', 4"; 32, 32'; 46; 51) which is free from rotational play, with the adjusting motor being an electric adjusting motor (3), with the coupling (4, 4', 4"; 32, 32'; 46, 51) having two parts which can be joined together, one of which parts is rotationally fixedly connected to or formed in one piece with the adjusting motor shaft (10) and the other of which parts is rotationally fixedly connected to or formed in one piece with the adjusting shaft (9), with one of the two parts being designed as an outer part (19, 19'; 33, 33') and the other part being designed as an inner part (18, 18'; 34, 34'), with it being possible for the two parts to be inserted one inside the other without rotational play, and with the coupling being designed as a twin-faced shaft coupling (4, 4', 4") which has in each case two coupling surfaces (21, 21') on the outer part (19, 19') and in each case two coupling surfaces (20, 20') on the inner part (18, 18'), **characterized in that**, on the latter, a minimum, closely toleranced play between the coupling surfaces (20, 21) of the inner and outer parts (18, 19) is provided as a means for preventing rotational play.

## Revendications

1. Dispositif de réglage de l'arbre à cames (1, 1') permettant de régler et de fixer l'emplacement de l'angle de rotation relatif d'un arbre à cames (8) par rapport à un vilebrequin d'un moteur à combustion interne à pistons à mouvement alternatif, avec un engrenage de réglage (2) à forte démultiplication et à faible frottement, qui comporte un arbre d'entraînement relié fixement sans rotation au vilebrequin, un arbre d'entraînement de sortie relié fixement sans rotation à l'arbre à cames (8) et un arbre de réglage (9) relié à un arbre de servomoteur (10) d'un servomoteur, l'engrenage de réglage (2) et le servomoteur (3) étant réalisés sous la forme d'unités séparées et reliées entre elles par l'intermédiaire d'un accouplement (4, 4', 4" ; 32, 32' ; 46, 51) amovible sans jeu de rotation, le servomoteur étant un servomoteur (3) électrique, l'accouplement (4, 4', 4"; 32, 32' ; 46, 51) comportant deux parties assemblables entre elles dont l'une est reliée fixement sans rotation à l'arbre de servomoteur (10) et l'autre à l'arbre de réglage (9) et/ou lesdites parties étant réalisées d'un seul tenant avec les arbres (9, 10), une des deux parties prenant la forme d'une partie extérieure (19, 19'; 33, 33') et l'autre d'une partie intérieure (18, 18'; 34, 34'), les deux parties pouvant être insérées sans jeu de rotation l'une dans l'autre et l'accouplement prenant la forme d'un accouplement d'arbre à deux facettes (4, 4', 4") comportant respectivement deux surfaces d'accouplement (21, 21') au niveau de la partie extérieure (19, 19') et respectivement deux surfaces d'accouplement (20, 20') au niveau de la partie intérieure (18, 18'), **caractérisé en ce qu'**un jeu minimal étroitement toléré est prévu au niveau du dernier moyen permettant d'éviter la présence de jeu de rotation entre les surfaces d'accouplement (20, 21) de la partie d'accouplement intérieure et extérieure (18, 19).
